(19)

Europäisches Patentamt

European Patent Office

Office européen des brevets

(11) **EP 1 254 355 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **01951168.2**

(22) Anmeldetag: **06.02.2001**

(51) Int Cl.:
***G01L 5/24*** (2006.01)

(86) Internationale Anmeldenummer:
**PCT/CH2001/000081**

(87) Internationale Veröffentlichungsnummer:
**WO 2001/059417 (16.08.2001 Gazette 2001/33)**

(54) **PRÜFGERÄT ZUR ERMITTLUNG DER REIB- UND VORSPANNWERTE VON SCHRAUBENVERBINDUNGEN**

TEST DEVICE FOR DETERMINING THE FRICTION AND PRESTRESS VALUES OF SCREWED CONNECTIONS

APPAREIL DE VERIFICATION DESTINE A DETERMINER LES VALEURS DE FROTTEMENT ET DE PRECONTRAINTE D'ASSEMBLAGES VISSES

(84) Benannte Vertragsstaaten:
**AT BE CH CY DE DK ES FI FR GB GR IE IT LI LU MC NL PT SE TR**

(30) Priorität: **07.02.2000 CH 2422000**

(43) Veröffentlichungstag der Anmeldung:
**06.11.2002 Patentblatt 2002/45**

(73) Patentinhaber: **Kistler Holding AG
8408 Winterthur (CH)**

(72) Erfinder:
• **ENGELER, Paul
CH-8500 Frauenfeld (CH)**

• **HAAB, Hans, Rudolf
CH-8400 Winterthur (CH)**

(56) Entgegenhaltungen:
DE-B- 2 352 749        DE-B- 2 521 428
US-A- 5 339 696

• **PATENT ABSTRACTS OF JAPAN vol. 9, no. 195 (P-379) [1918], 13. August 1985 (1985-08-13) & JP 60 060525 A (NIHON HATSUJIYOU K.K.), 8. April 1985 (1985-04-08)**

**Beschreibung**

In der Automatisierung von Schraubvorgängen, insbesondere im Automobil- und Flugzeugbau, sind höchste Qualitätsvorschriften einzuhalten und zu dokumentieren. Dazu sind die verwendeten Schraubgeräte mit eingebauten Drehmomentsicherungen versehen, die eine genaue Einhaltung der eingestellten maximalen Drehmomente oder der maximalen Drehwinkel garantieren.

Zur Qualitätssicherung werden die mittels Druckluft oder elektrisch betriebenen Schraubgeräte in regelmässigen Abständen überprüft, was in speziellen Prüfständen durchgeführt wird, worauf jedes Schraubgerät mit einem Prüfzeugnis versehen wird, siehe z.B. die in JP-A-60 060 525 beschriebene Vorrichtung.

Mit normalen allgemein eingeführten Kontrollgeräten werden hauptsächlich die maximalen Ausschaltdrehmomente der Schraubgeräte kontrolliert und wenn nötig neu eingestellt. Diese Kontrollgeräte funktionieren meist auf Dehnmessstreifen- oder piezoelektrischer Basis und sind in speziellen Werkprüfstationen untergebracht. Sie basieren auf Werten, die in den Prüflabors anhand komplizierter Messungen und Berechnungen durchgeführt wurden und den Zusammenhang zwischen maximalem Anziehdrehmoment $M_{tot}$ und Schrauben-Vorspannkraft $F_Z$ definiert. Für jede Schraubenverbindung müssen diese Werte bestimmt werden, um eine optimale Kraftverbindung zu gewährleisten.

Der Hauptzweck der Erfindung liegt nun darin, die wichtigsten Messdaten einer neuen Schraubverbindung mit einem erfindungsgemässen Prüfgerät rasch und genau zu ermitteln. Dazu müssen die Reibwerte des Schraubenkopfes $F_{RK}$ auf seiner Auflage und der Schraube bzw. Mutter im Gewinde $F_{RG}$ separat messbar sein. Damit können Materialpaarungswerte wie auch Schmiermittel optimiert werden, um repetierbare Schrauben-Vorspannkräfte $F_Z$ zu erzielen, sowie Losdrehmomente von Schraubensicherungen untersucht und optimiert werden. Wichtig ist ferner, dass die drei Messwerte

Vorspannung $F_Z$
Reibwert Kopf $F_{RK}$
Reibwert Gewinde $F_{RG}$

mit verschiedenen Paa-rungsmaterialien und Oberflächenzuständen bei verschiedenen Temperaturen rasch und zuverlässig bestimmbar sind.

Die Erfindung ermöglicht ein Prüfgerät, das aus einem zentralen Messträgerteil und auswechselbaren Gewinde-Adaptern und Auflageplatten besteht, die auf einfache Weise miteinander verschraubbar sind.

Zur weiteren Erklärung soll die Erfindung anhand von 6 Figuren beschrieben werden:

Es zeigen:

Fig 1      A und B zeigen die beiden wichtigsten Typen von Schraubverbindungen.

Fig. 2      zeigt ein übliches Kraft/Momentdiagramm auf Basis des Verdrehwinkels $\alpha$.

Fig. 3      zeigt das erfindungsgemässe Prüfgerät als Funktionsschema.

Fig. 4      zeigt eine mögliche Ausführungsform eines erfindungsgemässen Prüfgeräts in auseinandergezogener Darstellung.

Fig. 5      zeigt ein Beispiel einer auszumessenden Schraubverbindung.

Fig. 6      zeigt die mit dem erfindungsgemässen Prüfgerät feststellbaren Messwerte.

In der Folge sollen die einzelnen Figuren beschrieben werden.

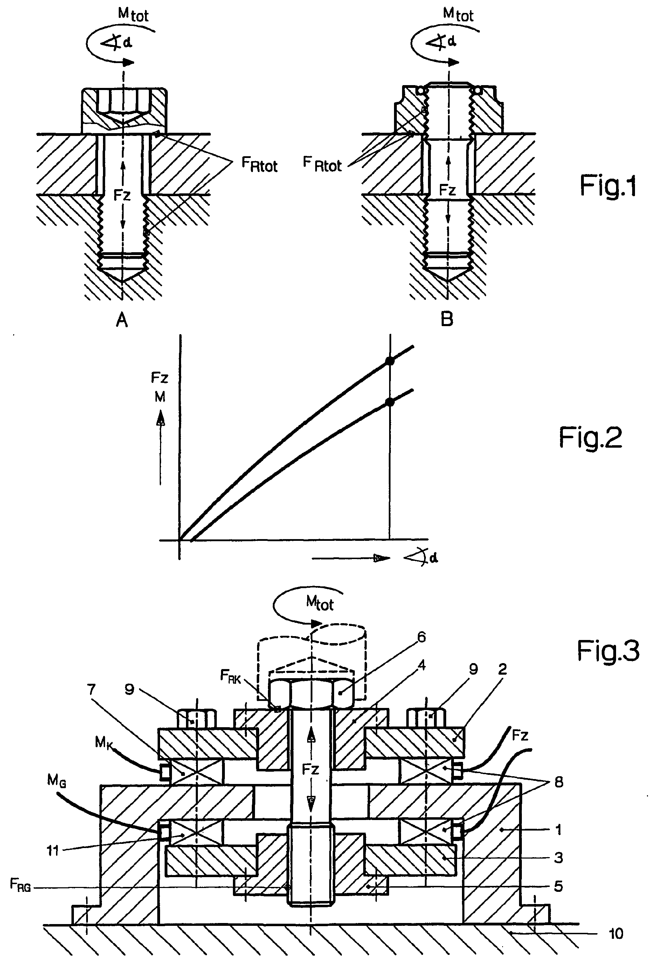

Fig. 1A      zeigt eine Schraubverbindung, an welcher gemäss Stand der Technik nur die Total-Reibkraft $F_{Rtot}$ gemessen wurde.

Fig. 1B      zeigt eine weitere Schraubverbindung, an welcher ebenfalls gemäss Stand der Technik nur die Total-Reibkraft $F_{Rtot}$ gemessen wurde.

Fig. 2      zeigt in einer Grafik wie die beiden Werte Vorspannkraft $F_Z$ und Total-Reibkraft $F_{Rtot}$ mit heute üblichen Prüfgeräten dem Stand der Technik entsprechend gemessen werden.

Fig. 3      zeigt schematisch ein erfindungsgemässes Prüfgerät,

das erstmals eine genaue Auftrennung der Total-Reibkraft $F_{Rtot}$ in

$F_{RK}$ Reibkraft des Schrauben/Mutterkopfes und
$F_{RG}$ Reibkraft des Gewindes ermöglicht.

Damit ergeben sich erstmals ganz neue Einsichten in die Analyse von Verschraubungen.

Auf einer mittleren Trägerplatte 1 sind beidseitig Sensoren 7,8,11 so aufgebaut, dass sie zwischen Moment-Einleitplatte 2 und Moment-Auffangplatte 3 eingespannt sind, mittels Schrauben 9. Auf jeder Seite der Trägerplatte 1 sind sowohl Schubkraftsensoren 7 wie auch Achsialkraftsensoren 8 montiert, so dass eine allgemein symmetrische Kraftverteilung entsteht. Die Schubkraftsensoren sind so angeordnet, dass die einzelnen Schubkomponenten zur Drehmomentmessung zusammengefasst werden können.

Wird nun die Prüfschraube 6 durch den Adapter 4 gesteckt und in den Adapter 5 eingewindet, so wird beim Anziehen durch die Achsialkraftsensoren 8 die Vorspannkraft $F_Z$, durch die Schubkraftsensoren 7 das Moment der Kopfreibung $M_K$ und durch die Schubkraftsensoren 11 das Moment der Gewindereibung $M_G$ gemessen. Wenn gewünscht, kann auch noch ein Verdrehwinkel-Sensor $\alpha$ eingebaut werden, was aber meist unnötig ist wegen der Unsicherheit des Beginns der Drehwinkelmessung. Die vier Standardwerte

| | |
|---|---|
| Vorspannkraft | $F_Z$ |
| Total-Drehmoment | $M_{tot}$ |
| Kopf-Reibmoment | $M_K$ |
| Gewinde-Reibmoment | $M_G$, |

die mit einem einzigen Anziehvorgang im erfindungsgemässen Prüfgerät genau ermittelt werden, genügen zur optimalen Gestaltung einer Schraubverbindung.

Die im Prüfgerät eingesetzten Sensoren können auf piezoelektrischer oder Dehnungsbasis aufgebaut sein. Piezoelektrische Sensoren haben den Vorteil, dass sie in einem wesentlich grösseren Temperaturbereich einsetzbar sind, als solche auf Dehnmessbasis.

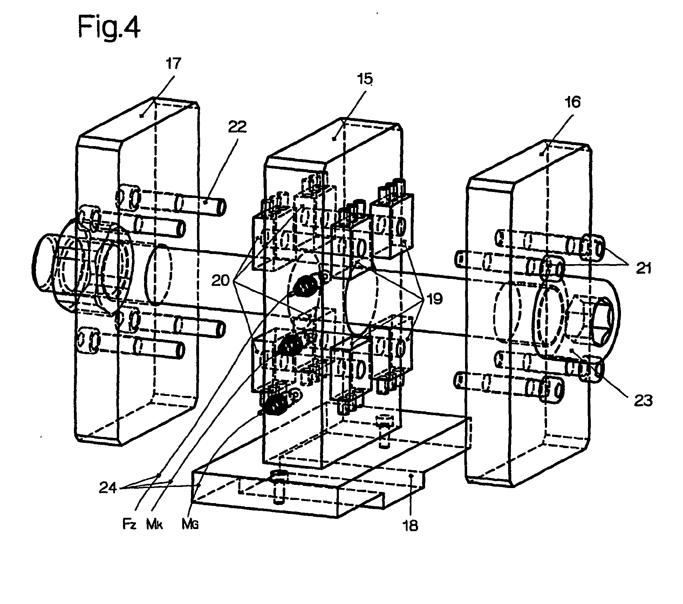

In Fig. 4 ist ein anderes Ausführungsbeispiel in auseinandergezogener Darstellung gezeigt. Die Sensorträgerplatte 15 ist auf die Grundplatte 18 montiert. Die gesamte Sensorik für Drehmoment und Achsialkraft ist auf beiden Seiten der Trägerplatte 15 angeordnet. Wenn erwünscht, können in dieser Platte 15 auch Verstärker eingebaut werden, was insbesondere bei piezoelektrischen Sensoren von Vorteil ist. Dadurch können die Messsignale niederohmig zur Auswerte-Elektronik weitergeleitet werden. Diese Variante schränkt den Temperaturmessbereich aber stark ein. Die Platten 16 und 17 können auf einfache Weise ausgewechselt und den speziellen Anforderungen angepasst werden. Mit den Verschraubungen 21 und 22 werden sie mit der Sensorträgerplatte 15 verbunden. Die Prüfschraube 23 ihrerseits bildet mit den Platten 16 und 17 die Messeinheit.

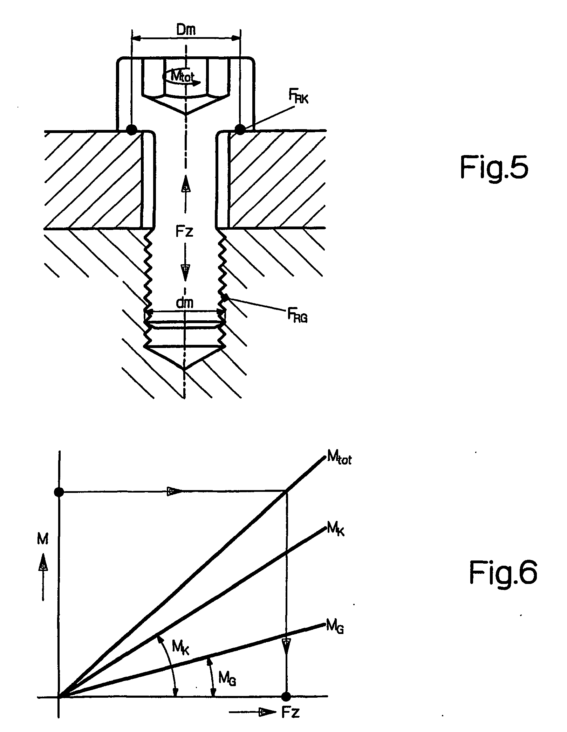

In Fig. 5 ist nochmals eine Prüfschraube 30 dargestellt mit den Dimensionen, die zu den wichtigen Reibwerten führen:

Kopf-Reibwert

$$\mu_K = \frac{M_K}{F_Z \times Dm}$$

Gewinde-Reibwert

$$\mu_G = \frac{M_G}{F_Z \times dm}$$

In Fig. 6 ist die mit den vier Messwerten darstellbare Grafik gezeigt, wobei das

$$\text{Total-Moment } M_{tot} = M_K + M_G$$

ist

und damit direkt zur Vorspannkraft $F_Z$ führt.

Das erfindungsgemässe Prüfgerät zeigt in seiner einfachen Konstruktion neue Wege auf, zur optimalen Gestaltung von Schraubenverbindungen.

Referenzliste

Fig. 1 A,B    $F_Z$    Vorspannkraft

(fortgesetzt)

| | | |
|---|---|---|
| | $M_{tot}$ | Total-Drehmoment |
| | | = Anzugsmoment |
| | $F_{Rtot}$ | Total-Reibkraft |
| | | (Gewinde + Auflage) |
| Fig. 2 | $\sphericalangle_\alpha$ | Verdrehwinkel |
| Fig. 3 | 1 | zentrale Sensor-Trägerplatte |
| | 2 | Moment-Einleitplatte |
| | 3 | Moment-Auffangplatte |
| | 4 | Adapter-Einsatz |
| | 5 | Adapter-Einsatz |
| | 6 | Prüfschraube |
| | 7 | Schubkraftsensoren $M_K$ |
| | 8 | Achsialkraftsensoren $F_Z$ |
| | 9 | Sensor-Verschraubungen |
| | 10 | Montage-Grundplatte |
| | 11 | Schubkraftsensoren $M_G$ |
| Fig. 4 | 15 | zentrale Sensor-Trägerplatte |
| | 16 | Moment-Einleitplatte |
| | 17 | Moment-Auffangplatte |
| | 18 | Grundplatte |
| | 19 | Sensor-Anordnungen |
| | 20 | Sensor-Andordnungen |
| | 21 | Sensor-Verschraubungen |
| | 22 | Sensor-Verschraubungen |
| | 23 | Prüfschraube |
| | 24 | Signalanschlüsse $F_Z$ $M_K$ $M_G$ |
| Fig. 5 | 30 | Prüfschraube |
| | Dm | mittlerer Durchmesser Schraubenkopf-Auflage |
| | dm | mittlerer Durchmesser Gewinde |
| Fig. 6 | $M_{tot}$ | Total-Drehmoment |
| | $M_K$ | Moment der Kopfreibung |
| | $M_G$ | Moment der Gewindereibung |
| | $\mu_K$ | Kopf-Reibwert |
| | $\mu_G$ | Gewinde-Reibwert |
| | $F_Z$ | Vorspannkraft |

**Patentansprüche**

**1.** Prüfgerät für Schraubverbindungen bestehend aus Schraubenhalterungsmitteln, die mit Sensoren bestückt sind, **dadurch gekennzeichnet, dass** eine zentrale Sensorträgerplatte (1,15) mit beidseitigen Sensoranordnungen (7,8,11,19,20) auf einer Grundplatte (10,18) montiert ist und mit Momenteinleit- (2, 16) und Momentauffangplatten (3,17), zwischen denen die Sensoren (7,8,11,19,20) eingespannt sind, die Kopf- und Gewinde-Reibkräfte wie auch die Vorspannkraft separat erfassbar macht.

**2.** Prüfgerät für Schraubverbindungen nach Anspruch 1, **dadurch gekennzeichnet, dass** die Platten (2,3,16,17) mit Adaptern (4,5) verbunden sind, die gestatten, verschiedene Schraubendimensionen mit demselben Gerät und sowohl Anzug- wie Lösemomente und -Kräfte zu messen.

**3.** Prüfgerät für Schraubverbindungen nach Ansprüchen 1 oder 2, **dadurch gekennzeichnet, dass** zur symmetrischen Kraftverteilung eine Mehrzahl von Sensoren in 3-eck, 4-eck oder Kreisanordnung, jeweils beidseitig der zentralen Trägerplatte (1,15) angeordnet sind.

4. Prüfgerät für Schraubverbindungen nach einem der Ansprüche 1,2 oder 3, **dadurch gekennzeichnet, dass** piezoelektrische Sensoren für Achsialkraft $F_Z$ sowie Drehmomente $M_K$ und $M_G$ eingesetzt sind, wozu Sensoren geeignet sind, die Druck und Schub gleichzeitig messen.

5. Prüfgerät für Schraubverbindungen nach Anspruch 4, **dadurch gekennzeichnet, dass** die Kristall-Elemente zu den Piezosensoren direkt in die zentrale Trägerplatte (1,15) integriert sind.

6. Prüfgerät für Schraubverbindungen nach einem der Ansprüche 1 bis 5, **dadurch gekennzeichnet, dass** elektronische Verstärker direkt in die zentrale Trägerplatte (1,15) integriert sind.

7. Prüfgerät für Schraubverbindungen nach einem der Ansprüche 1 bis 6, **dadurch gekennzeichnet, dass** die elektronischen Verstärker mit Bereichsumschaltung versehen sind, wodurch speziell interessante Teile der Messungen faktorenmal vergrössert werden.

8. Prüfgerät für Schraubverbindungen nach einem der Ansprüche 1 bis 3 und 6 bis 7, **dadurch gekennzeichnet, dass** andere Messelemente als piezoelektrische Sensoren verwendet werden.

## Claims

1. A test device for screwed connections, consisting of screw holding means equipped with sensors, **characterized in that** a central sensor support plate (1, 15) with sensor arrangements (7, 8, 11, 19, 20) on both sides is mounted on one base plate (1.0, 18) and which can detect separately both the head and thread friction forces and the preload force by means of torque application plates (2, 16) and torque receptor plates (3, 17) between which the sensors (7, 8, 11, 19, 20) are fixed.

2. The test device for screwed connections according to claim 1, **characterized in that** the plates (2, 3, 16, 17) are connected with adapters (4, 5) which allow different screw dimensions to be measured with the same device and both tightening and loosening torques and forces.

3. The test device for screwed connections according to claim 1 or 2, **characterized in that** for a symmetrical force distribution, a plurality of sensors is arranged in a triangular, square or circular arrangement, respectively, on both sides of the central support plate (1, 15).

4. The test device for screwed connections according to any of the claims 1, 2 or 3, **characterized in that** piezoelectric sensors are employed for axial force $F_Z$ and torques $M_K$ and $M_G$, for which purpose sensors are suitable which measure pressure and shear simultaneously.

5. The test device for screwed connections according to claim 4, **characterized in that** the crystal elements for the piezo sensors are integrated directly into the central support plate (1, 15).

6. The test device for screwed connections according to any of the claims 1 to 5, **characterized in that** electronic amplifiers are integrated directly into the central support plate (1, 15).

7. The test device for screwed connections according to any of the claims 1 to 6, **characterized in that** the electronic ampifiers are provided with a range selection which specifically enables interesting parts of the measurements to be increased by factors.

8. The test device for screwed connections according to any of the claims 1 to 3 and 6 to 7, **characterized in that** measuring elements other than piezoeletric sensors are used.

## Revendications

1. Un appareil d'essai pour des liaisons vissées comprenant des moyens de support de vis équipés de senseurs **caractérisé en ce qu'**une plaque centrale porteuse de senseurs (1, 15) ayant des arrangements de senseurs (7, 8, 11, 19, 20) des deux côtés est assemblée sur une plaque de base (10, 18) et **en ce que** ladite plaque, avec des plaques d'introduction des moments (2, 16) et de capture des moments (3, 17), entre lesquelles sont serrés les senseurs (7, 8, 11, 19, 20), rend saisissables séparément les forces de friction de la tête et du filetage et la force de prétension.

2. Un appareil d'essai pour des liaisons vissées selon la revendication 1 **caractérisé en ce que** les plaques (2, 3, 16, 17) sont jointes l'une à l'autre avec des adaptateurs (4, 5) permettant la mesure des dimensions de vis différentes utilisant le même appareil et permettant la mesure des moments et des forces de serrage et de dévissage.

3. Un appareil d'essai pour des liaisons vissées selon la revendication 1 ou 2 **caractérisé en ce que** pour obtenir une distribution de force symétrique une pluralité des senseurs est arrangée respectivement en forme de triangle, de carré ou de cercle des deux côtés de la plaque centrale porteuse (1, 15).

4. Un appareil d'essai pour des liaisons vissées selon une des revendications 1, 2 ou 3 **caractérisé en ce qu'**on utilise des senseurs piézo-électriques pour la force axiale $F_Z$ et les couples de rotation $M_K$ et $M_G$ et **en ce que** pour cela sont utilisables des senseurs aptes à mesurer simultanément la pression et la poussée.

5. Un appareil d'essai pour des liaisons vissées selon la revendication 4 **caractérisé en ce que** les éléments de cristal des senseurs piézo-électriques sont intégrés directement dans la plaque centrale porteuse (1, 15).

6. Un appareil d'essai pour des liaisons vissées selon une des revendications 1 à 5 **caractérisé en ce que** des amplificateur électroniques sont intégrés directement dans la plaque centrale porteuse (1, 15) .

7. Un appareil d'essai pour des liaisons vissées selon une des revendications 1 à 6 **caractérisé en ce que** les amplificateurs électroniques sont équipés avec commutation des gammes pour l'agrandissement spécifique de multiples ordres de grandeur des parties de la mesure intéressantes.

8. Un appareil d'essai pour des liaisons vissées selon une des revendications 1 à 3 et 6 à 7 **caractérisé en ce qu'**on utilise autres éléments de mesure que des senseurs piézo-électriques.

Fig.1

Fig.2

Fig.3

# Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 60060525 A